# EUROPEAN PATENT APPLICATION

(11) **EP 2 251 613 A2**
(43) Date of publication of application: **17.11.2010**
(21) Application number: 10161985.6
(22) Date of filing: 05.05.2010
(51) Int. Cl.: F24F 3/14, B60H 3/02

(54) **Dehumidification system for vehicle**

(30) Priority: 08.05.2009 JP 2009113609
(71) Applicant: Kabushiki Kaisha Toyota Jidoshokki, Kariya-shi, Aichi 448-8671 (JP)
(72) Inventor: Yokomachi, Naoya, Kariya-shi Aichi 448-8671 (JP); Suzuki, Junya, Kariya-shi Aichi 448-8671 (JP); Nishimori, Noritaka, Kariya-shi Aichi 448-8671 (JP); Morisaku, Naoto, Kariya-shi Aichi 448-8671 (JP)
(74) Representative: TBK-Patent

(57) **Abstract**

A dehumidification system for a vehicle includes a duct (1) and a desiccant dehumidifier (7). The duct (1) includes inside and outside air inlets (12A,13A), an air passage (15), a flap (14), an air outlet (11A) communicating with the vehicle interior, a heat source (35) and an outside air heat exchanger (3). The desiccant dehumidifier includes a desiccant rotor (31), a humidity conditioning air passage (36), a dehumidified air passage (33), a regeneration passage (34), a humidified air passage (35) and a regeneration heater (34A). The air from the heat source is introduced into the desiccant rotor through the humidity conditioning air passage and introduced to the air outlet through the dehumidified air passage. The air from the heat source is introduced into the desiccant rotor through the regeneration passage and flowed through the humidified air passage. The outside air heat exchanger includes a heat exchanger (9A), an outside air passage (32), a heated outside air passage (38) and a cooled humidified air passage (39).

## Description

### BACKGROUND OF THE INVENTION

The present invention relates to a dehumidification system for a vehicle.

A conventional dehumidification system is disclosed in Japanese Patent Application Publication No. 2000-146220, which includes a duct, a heat source and a desiccant dehumidifier.

The duct has first and second air inlets, an air passage and first and second air outlets formed therein. The first and second air inlets are located upstream of the air passage for communication therewith with respect to the direction of air flowing in the air passage, and the first and second air outlets are located downstream of the air passage for communication therewith. Air inside and outside the vehicle can be flowed into the air passage through the first and second air inlets. The first air outlet can communicate with the vehicle interior, and the second air outlet can communicate with the outside of the vehicle. The air passage is partitioned by a partition wall into first and second spaces providing air communication between the first air inlet and outlet and between the second air inlet and outlet, respectively.

The heat source is provided by a Peltier module having a radiator for heating ambient air and a heat sink for absorbing heat from ambient air. The heat source is disposed upstream of the air outlets in the air passage of the duct. The heat sink of the heat source is located in the first space of the air passage which communicates with the first air inlet, and the radiator is located in the second space of the air passage which communicates with the second air inlet.

The desiccant dehumidifier includes a desiccant rotor, a humidity conditioning air passage, a dehumidified air passage, a regeneration passage and a humidified air passage. Humidity conditioning air is flowed through the humidity conditioning air passage and introduced into the desiccant rotor to be dehumidified, and the air dehumidified by the desiccant rotor is flowed through the dehumidified air passage. Air for regenerating the desiccant rotor is flowed through the regeneration passage and introduced into the desiccant rotor to be humidified, and the air humidified by the desiccant rotor is flowed through the humidified air passage. The desiccant rotor is located just downstream of the heat source in the duct. A part of the air passage communicating with the first air inlet forms the humidity conditioning air passage. Another part of the air passage communicating with the first air outlet forms the dehumidified air passage. Yet another part of the air passage communicating with the second air inlet forms the regeneration passage. Still another part of the air passage communicating with the second air outlet forms the humidified air passage.

In the above-described dehumidification system, air is introduced through the first air inlet and flowed through the humidity conditioning air passage and into the heat source. The humidity conditioning air in the heat source is cooled by the heat sink of the heat source and introduced into the desiccant rotor to be dehumidified. The air dehumidified by the desiccant rotor is flowed through the dehumidified air passage and the first air outlet and supplied to the vehicle interior.

Meanwhile, air introduced through the second air inlet is flowed through the regeneration passage and into the heat source. The air in the heat source is heated by the radiator of the heat source. The heated air or the regenerating air is introduced into the desiccant rotor for regenerating the desiccant rotor by dehumidification. The air humidified in the desiccant rotor by dehumidification is flowed through the humidified air passage and the second air outlet and discharged to the outside of the vehicle. Thus, the dehumidification performance of the desiccant rotor can be recovered.

The above-described dehumidification system is advantageous in terms of the reduction of energy consumption over its conventional dehumidification system for a vehicle which accomplished air conditioning of the vehicle interior by refrigeration cycle and exhaust heat developed by the vehicle engine.

The regenerating performance of a dehumidification system using a desiccant dehumidifier is increased with an increase of the temperature of the regenerating air. In the above-described dehumidification system, air to be introduced into the dehumidification system is not limited to inside or outside air. In such a case, during winter, when outside air having a relatively low temperature is used for regenerating the desiccant rotor, a large amount of energy is consumed by the heat source for heating the outside air used for regenerating the desiccant rotor.

The present invention is directed to providing a dehumidification system for a vehicle whose energy consumption is reduced effectively.

### SUMMARY OF THE INVENTION

In accordance with the present invention, a dehumidification system for a vehicle includes a duct, a desiccant dehumidifier and an outside air heat exchanger. The duct includes an inside air inlet, an outside air inlet, an air passage, a flap, an air outlet and a heat source. The inside air inlet communicates with the vehicle interior. Air from the vehicle interior is introduced into the duct through the inside air inlet. The outside air inlet communicates with the outside of the vehicle. Air from the outside of the vehicle is introduced into the duct through the outside air inlet. The air passage is positioned downstream of the inside air inlet and the outside air inlet. The flap is operable to provide air communication between the inside air inlet and the air passage and/or the outside air inlet and the air passage. The air outlet communicates with the vehicle interior and the air passage at a position downstream of the flap. The heat source is disposed in the air passage for heating the air from the inside air inlet and/or the outside air inlet. The desiccant dehumidifier is disposed downstream of the heat source in the air passage. The desiccant dehumidifier includes a desiccant rotor, a humidity conditioning air passage, a dehumidified air passage, a regeneration passage, a regeneration heater and a humidified air passage. The desiccant rotor dehumidifies the air. The air from the heat source is introduced into the desiccant rotor through the humidity conditioning air passage. The air from the humidity conditioning air passage via the desiccant rotor is introduced to the air outlet through the dehumidified air passage. The air from the heat source is introduced into the desiccant rotor through the regeneration passage. The regeneration heater is disposed in the regeneration passage for heating the air from the heat source. The air from the regeneration passage via the desiccant rotor is flowed through the humidified air passage. The outside air heat exchanger includes a heat exchanger, an outside air passage, a heated outside air passage and a cooled humidified air passage. The heat exchanger communicates with the humidified air passage. The outside air passage communicates the outside of the vehicle to the heat exchanger for introducing air from the outside of the vehicle. The air from the outside air passage via heat exchanger is introduced to the air outlet through the heated outside air passage. The air from the humidified air passage via heat exchanger is introduced to the outside of the vehicle through the cooled humidified air passage.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing a dehumidification system for a vehicle according to a preferred embodiment of the present invention;
Fig. 2 is a schematic view of the dehumidification system of Fig.1, showing a state wherein only the inside air is introduced into a duct of the dehumidification system; and
Fig. 3 is a schematic illustrative view showing the state of the dehumidification system of Fig. 2.

### DETAILED DESCRIPTION OF THE PREFERRED EMBODIMENT

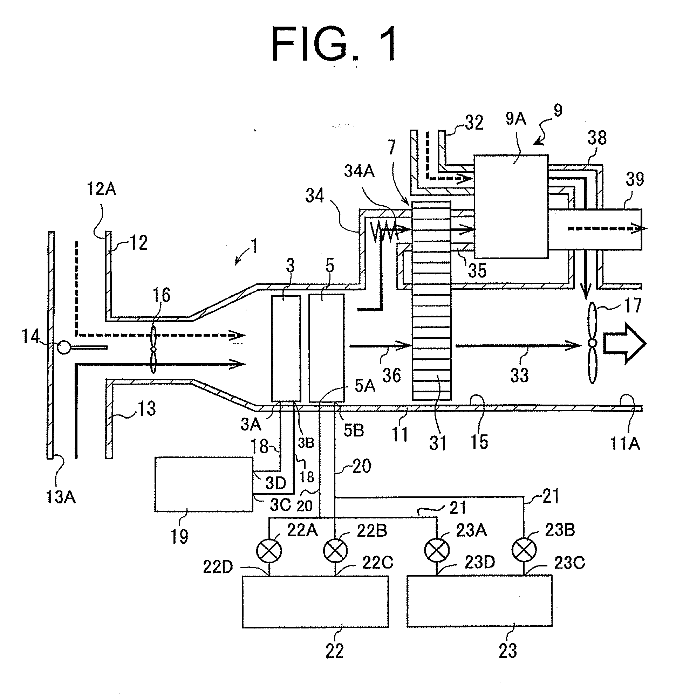

The following will describe a dehumidification system for a vehicle according to a preferred embodiment of the present invention with reference to Figs. 1 through 3.

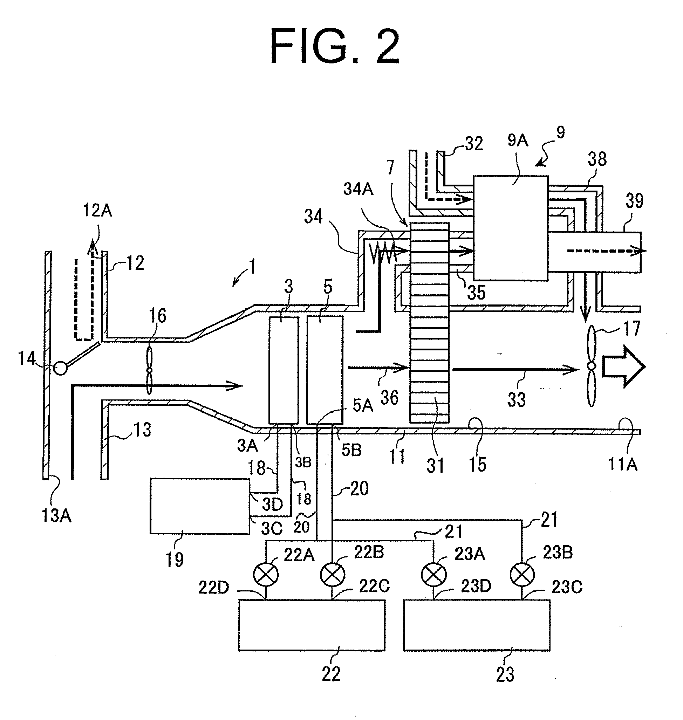

The dehumidification system according to the preferred embodiment of the present invention is used for a hybrid vehicle or an electric vehicle. Referring to Figs. 1 and 2, the dehumidification system includes a duct 1, a first heat exchanger 3, a second heat exchanger 5, an electric heater 34A, a desiccant dehumidifier 7 and an outside air heat exchanger 9.

The duct 1 includes a cylindrical main body 11 and pipes 12, 13. An air passage 15 is formed in the main body 11. Each of the pipes 12, 13 is branched from the upstream end of the main body 11 with respect to the direction of air flowing in the air passage 15. The pipe 12 has at the upstream end thereof an outside air inlet 12A opened to the outside of the vehicle. The pipe 13 has at the upstream end thereof an inside air inlet 13A opened to the vehicle interior. A flap 14 is disposed at the bifurcation between the pipes 12 and 13.

The air passage 15 is positioned downstream of the outside air inlet 12A and the inside air inlet 13A. The flap 14 is operable to provide air communication between the outside air inlet 12A and the air passage 15, the inside air inlet 13A and the air passage 15, or the both of the outside air inlet 12A and the inside air inlet 13A and the air passage 15. A blower 16 is disposed downstream of the flap 14 in the air passage 15 and upstream of the first and second heat exchangers 3, 5 and serves as an upstream blower. The air passage 15 has at the downstream end thereof an air outlet 11A opened to the vehicle interior. Thus, the air outlet 11A communicates with the vehicle interior and the air passage 15 at a position downstream of the flap 14. Another blower 17 is disposed just upstream of the air outlet 11A in the air passage 15 and serves as a downstream blower.

The first and second heat exchangers 3, 5 serve as a heat source in the dehumidification system. A heat collector 19 is connected to the first heat exchanger 3 through pipes 18. The pipes 18 serve as a first pipe. The heat collector 19 serves as a heat accumulator and collects exhaust heat generated in the vehicle, or heat around an inverter or a motor of the vehicle by heat exchange with water which serves as a heat exchange medium. The first heat exchanger 3 has a first inlet 3A and a first outlet 3B connected to the pipes 18, respectively. The heat collector 19 has a second inlet 3C and a second outlet 3D connected to the pipes 18, respectively.

Heat accumulators 22, 23 are connected to the second heat exchanger 5 through pipes 20, 21 serving as a second pipe. The second heat exchanger 5 has a first inlet 5A and a first outlet 5B connected to the pipes 20, respectively. The heat accumulators 22, 23 have a heat storage medium. The heat accumulators 22, 23 are thermally insulated from outside. Heat of the heat storage medium may be transferred by heat exchange to the water serving as a heat exchange medium, The second heat exchanger 5 is connected to the heat accumulator 22 through the pipes 20. The heat accumulator 23 is connected to the pipes 20 through the pipes 21. Valves 22A, 22B are connected in the pipes 20 at positions adjacent to the heat accumulator 22, respectively. Valves 23A, 23B are disposed in the pipes 21 at positions adjacent to the heat accumulator 23, respectively. The heat accumulator 22 has a second inlet 22C and a second outlet 22D connected to the pipes 20, respectively. The heat accumulator 23 has a second inlet 23C and a second outlet 23D connected to the pipes 21, respectively.

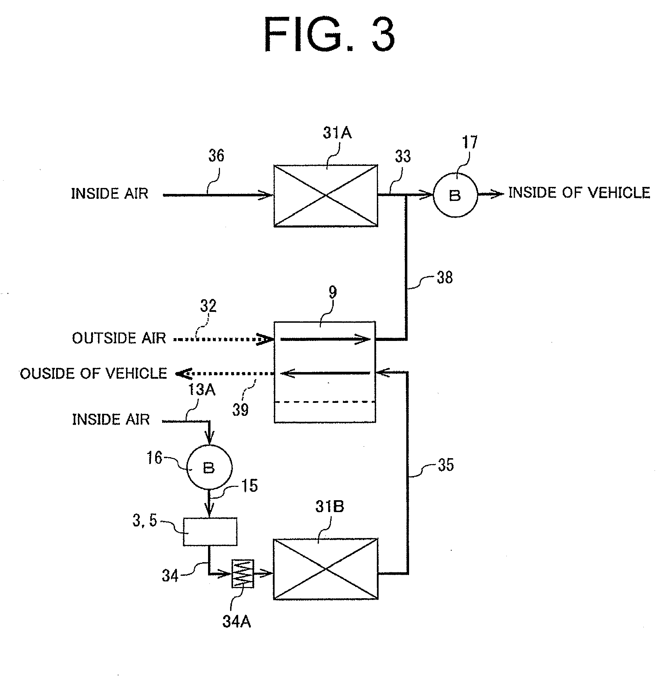

The main body 11 of the duct 1 has therein the desiccant dehumidifier 7 and the outside air heat exchanger 9. The desiccant dehumidifier 7 includes a known desiccant rotor 31 dehumidifying air, a humidity conditioning air passage 36 and a dehumidified air passage 33. The desiccant rotor 31 dehumidifies air. Humidity conditioning air from the first and second heat exchangers 3, 5 is flowed through the humidity conditioning air passage 36 and into the desiccant rotor 31 to be dehumidified. The air from the humidity conditioning air passage 36 via the desiccant rotor 31 is introduced to the air outlet 11A through the dehumidified air passage 33. Humidity conditioning air is the air that is to be introduced into the desiccant rotor 31 and used for air conditioning in the vehicle interior. Referring to Fig. 3, the desiccant rotor 31 includes a dehumidification zone 31A and a regeneration zone 31 B. The dehumidification zone 31A and the regeneration zone 31 B are replacable with each other by rotation of the desiccant rotor 31.

As shown in Figs. 1 and 2, the desiccant dehumidifier 7 further includes a regeneration passage 34 and a humidified air passage 35. Humidity conditioning air from the first and second heat exchangers 3, 5 is introduced into the desiccant rotor 31 through the regeneration passage 34. The air from the regeneration passage 34 via the desiccant rotor 31 is flowed through the humidified air passage 35. An electric heater 34A is disposed in the regeneration passage 34 for heating the air from the first and second heat exchanger 3, 5 and serves as a regeneration heater.

The humidity conditioning air passage 36 and the regeneration passage 34 are located upstream of the desiccant rotor 31 in the desiccant dehumidifier 7. The dehumidified air passage 33 and the humidified air passage 35 are located downstream of the desiccant rotor 31 in the desiccant dehumidifier 7.

As shown in Fig. 3, heat exchange is performed between the humidified air and the outside air in the outside air heat exchanger 9. The outside air heat exchanger 9 includes a third heat exchanger 9A, an outside air passage 32, a heated outside air passage 38 and a cooled humidified air passage 39. The outside air passage 32 is communicating the outside of the vehicle to the third heat exchanger 9A for introducing therethrough outside air. The third heat exchanger 9A serving as a heat exchanger communicates with the humidified air passage 35. In the third heat exchanger 9A, the heat of the humidified air flowed through the humidified air passage 35 is transferred to the outside air flowed through the outside air passage 32. Thus, the air from the outside of the vehicle is heated in the third heat exchanger 9A and discharged through the heated outside air passage 38, and the humidified air is cooled in the third heat exchanger 9A and discharged through the cooled humidified air passage 39. In other word, the air from the outside air passage 32 via the third heat exchanger 9A is introduced to the air outlet 11A through the heated outside air passage 38, and the air from the humidified air passage 35 via the third heat exchanger 9A is introduced to the outside of the vehicle through the cooled humidified air passage 39.

The dehumidified air passage 33 and the heated outside air passage 38 communicate with the vehicle interior through the air outlet 11A. The regeneration passage 34 communicates at a position downstream of the first and second heat exchangers 3, 5 with the air passage 15. The cooled humidified air passage 39 communicates with the outside of the vehicle.

The following will describe the operation of the above-described dehumidification system for heating the inside of the vehicle during winter, with reference to Fig. 1 through 3. Arrows indicated by solid lines in the drawings show flowing direction of warm air, and arrows indicated by dashed lines in the drawings show flowing direction of cool air.

While a vehicle is parked, for example, in a parking lot, the heat storage media of the heat accumulators 22, 23 accumulates heat. When the vehicle is driven to run, the amount of exhaust heat from the vehicle is relatively small during the initial period of running, and the valves 22A, 22B or 23A, 23B of the heat accumulators 22, 23 are opened, so that hot water in the heat accumulators 22, 23 is supplied to the second heat exchanger 5 through the pipes 20, 21. Specifically, water is introduced through the first inlet 5A and discharged through the first outlet 5B, and heat of the water is transferred to the air from the inside and/or outside of the vehicle by heat exchange. The heat accumulators 22, 23 which are thermally insulated is prevented from discharging heat uselessly. Therefore, the heat accumulators 22, 23 may heat the vehicle interior for a relatively long period of time.

Meanwhile, when the vehicle generates a relatively large amount of exhaust heat, the valves 22A, 22B or 23A, 23B are closed and heated water in the heat collector 19 is supplied to the first heat exchanger 3. Specifically, water is introduced through the first inlet 3A and discharged through the first outlet 3B, and heat of the water is transferred to the air from the inside and/or outside of the vehicle by heat exchange. Thus, heating of the vehicle interior is achieved effectively by the exhaust heat generated in the vehicle.

The following will describes the dehumidification system according to the preferred embodiment of the present invention more in detail. When the blower 16 is actuated with the flap 14 is placed at the middle position as shown in Fig. 1, air is introduced from the inside and outside of the vehicle into the air passage 15 through the inside air inlet 13A and the outside air inlet 12A, respectively. The air thus introduced from the inside and outside of the vehicle is heated in the first and second heat exchangers 3, 5 disposed in the air passage 15.

The heated air is flowed through the humidity conditioning air passage 36 and into the dehumidification zone 31A of the desiccant rotor 31 to be dehumidified. The air thus dehumidified or dried in the dehumidification zone 31A is then flowed through the dehumidified air passage 33 and the air outlet 11A, and supplied to the vehicle interior. In addition, the inside air flowed into the humidity conditioning air passage 36 is flowed from the first and second heat exchangers 3, 5 as shown in Fig. 1, which is not shown in Fig. 3.

A part of the inside and outside air heated by the first and second heat exchangers 3, 5 is flowed through the regeneration passage 34 and heated by the electric heater 34A. The heated air in the regeneration passage 34 is introduced into the regeneration zone 31 B of the desiccant rotor 31 for regenerating the desiccant rotor 31 while maintaining a high regenerating performance without allowing the heat to be discharged around uselessly. The air introduced into the desiccant rotor 31 is humidified therein and the humidified air is flowed through the humidified air passage 35 and into the outside air heat exchanger 9.

Outside air having a relatively low temperature is introduced directly into the outside air heat exchanger 9 through the outside air passage 32, and the humidified air having a relatively high temperature is introduced into the outside air heat exchanger 9 through the humidified air passage 35. Heat exchange is performed between the air from the outside of the vehicle having a relatively low temperature and the humidified air having a relatively high temperature, and the heat of the humidified air is transferred to the air from the outside, thereby cooling the humidified air and heating the air from the outside. The cooled humidified air is discharged to the outside of the vehicle through the cooled humidified air passage 39. The air flowed from the outside and heated is flowed into the air passage 15 through the heated outside air passage 38, and the heated air in the air passage 15 is merged with the dehumidified air in the air passage 15 and flowed into the vehicle interior through the air outlet 11A by the blower 17.

Therefore, in the dehumidification system of the preferred embodiment of the present invention, the air dehumidified by the desiccant rotor 31 and the heated air from the outside heat the vehicle interior, and the dehumidification performance of the desiccant rotor 31 may be effectively recovered by the air for regenerating the desiccant rotor 31.

When the flap 14 is positioned to block the communication between the outside air inlet 12A and the air passage 15, as shown in Fig. 2, only inside air is introduced into the air passage 15. The inside air is used for heating the vehicle interior, and the amount of the heat of the inside air is relatively large. The inside air is heated by the first and second heat exchangers 3, 5 and the electric heater 34A for regenerating the desiccant rotor 31. In other words, outside air having a relatively low temperature is not used for regenerating the desiccant rotor 31, In this case, though the energy consumption for heating is reduced, air having relatively high regenerating performance may be obtained.

Thus, according to the preferred embodiment of the present invention, the energy consumption of the dehumidification system may be reduced effectively. In the dehumidification system according to the preferred embodiment of the present invention, the first heat exchanger 3 connected to the heat collector 19 and the second heat exchanger 5 connected to the heat accumulators 22, 23 serve as a heat source, so that the energy consumption of the dehumidification system may be reduced remarkably.

The present embodiment is to be considered as illustrative and not restrictive, and the invention is not to be limited to the details given herein but may be modified within the scope of the appended claims.

In the preferred embodiment, each of the first and second heat exchangers 3, 5 is used as a heat source. Alternatively, an electric heater may be used.

In the preferred embodiment, both of the first heat exchanger 3 connected to the heat collector 19 and the second heat exchanger 5 connected to the heat accumulators 22, 23 are used. Alternatively, the first heat exchanger 3 may be omitted, and the heat collector 19 may be connected directly to the second heat exchanger 5 or connected to the second heat exchanger 5 through the pipe 18 and the pipe 20.

A dehumidification system for a vehicle includes a duct and a desiccant dehumidifier. The duct includes inside and outside air inlets, an air passage, a flap, an air outlet communicating with the vehicle interior, a heat source and an outside air heat exchanger. The desiccant dehumidifier includes a desiccant rotor, a humidity conditioning air passage, a dehumidified air passage, a regeneration passage, a humidified air passage and a regeneration heater. The air from the heat source is introduced into the desiccant rotor through the humidity conditioning air passage and introduced to the air outlet through the dehumidified air passage. The air from the heat source is introduced into the desiccant rotor through the regeneration passage and flowed through the humidified air passage. The outside air heat exchanger includes a heat exchanger, an outside air passage, a heated outside air passage and a cooled humidified air passage.

## Claims

1. A dehumidification system for a vehicle comprising a duct (1) and a desiccant dehumidifier (7),
**characterized in that** the duct (1) includes:
an inside air inlet (12A) communicating with the vehicle interior and through which air from the vehicle interior is introduced into the duct (1);
an outside air inlet (13A) communicating with the outside of the vehicle and through which air from the outside of the vehicle is introduced into the duct (1);
an air passage (15) positioned downstream of the inside air inlet (12A) and the outside air inlet (13A);
a flap (14) operable to provide air communication between the inside air inlet (12A) and the air passage (15) and/or the outside air inlet (13A) and the air passage (15);
an air outlet (11A) communicating with the vehicle interior and the air passage (15) at a position downstream of the flap (14); and
a heat source (3, 5) disposed in the air passage (15) for heating the air from the inside air inlet (12A) and/or the outside air inlet (13A), and
the desiccant dehumidifier (7) is disposed downstream of the heat source (3, 5) in the air passage (15) and includes:
a desiccant rotor (31) dehumidifying the air;
a humidity conditioning air passage (36) through which the air from the heat source (3, 5) is introduced into the desiccant rotor (31);
a dehumidified air passage (33) through which the air from the humidity conditioning air passage (36) via the desiccant rotor (31) is introduced to the air outlet (11A),
a regeneration passage (34) through which the air from the heat source (3, 5) is introduced into the desiccant rotor (31)
a regeneration heater (34A) disposed in the regeneration passage (34) for heating the air from the heat source (3, 5); and
a humidified air passage (35) through which the air from the regeneration passage (34) via the desiccant rotor (31) is flowed,
the dehumidification system further includes an outside air heat exchanger (9) including:
a heat exchanger (9A) communicating with the humidified air passage (35);
an outside air passage (32) communicating the outside of the vehicle to the heat exchanger (9A) for introducing air from the outside of the vehicle;
a heated outside air passage (38) through which the air from the outside air passage (32) via the heat exchanger (9A) is introduced to the air outlet (11A); and
a cooled humidified air passage (39) through which the air from the humidified air passage (35) via the heat exchanger (9A) is introduced to the outside of the vehicle.

2. The dehumidification system according to claim 1, **characterized in that** the heat source is a heat exchanger (3, 5), and the heat exchanger (3, 5) of the heat source including:
a heat exchange medium whose heat is transferred to the air from the inside and/or outside of the vehicle by heat exchange;
a first inlet (3A, 5A) through which the heat exchange medium is introduced; and
a first outlet (3B, 5B) through which the heat exchange medium is discharged,
the dehumidification system further comprising a heat accumulator (19, 22, 23) accumulating heat, the heat accumulator (19, 22, 23) including:
a second inlet (3C, 22C, 23C) through which the heat exchange medium is introduced; and
a second outlet (3D, 22D, 23D) through which the heat exchange
medium is discharged,
and pipes (18, 20, 21) connecting the first air outlet (3B, 5B) to the second air inlet (3C, 22C, 23C) and the first air inlet (3A, 5A) to the second air outlet (3D, 22D, 23D).

3. The dehumidification system according to claim 2, **characterized in that** the heat accumulator (22, 23) further includes a heat storage medium whose heat is transferred to the heat exchange medium by heat exchange, and **in that** the heat storage medium is thermally insulated from outside.

4. The dehumidification system according to claim 3, **characterized in that** the heat accumulator (22, 23) accumulating heat generated while the vehicle is parked.

5. The dehumidification system according to claim 2, **characterized in that** the heat exchanger (3,5) of the heat source includes a first heat exchanger (3) and a second heat exchanger (5), and **in that** the heat accumulator of the first heat exchanger (3) is a heat collector (19) collecting exhaust heat generated in the vehicle, and the heat accumulator (22, 23) of the second heat exchanger (5) includes the heat storage medium.

6. The dehumidification system according to claim 5, **characterized in that** the pipes (18, 20, 21) have first pipes (18) connecting the heat collector (19) to the first heat exchanger (3) and second pipes (20, 21) connecting the heat accumulator (22, 23) to the second heat exchanger (5), and valves (22C, 22D, 23C, 23D) are disposed in the second pipes (20, 21), wherein the valves (22C, 22D, 23C, 23D) are opened to supply the heat exchange medium to the second heat exchanger (5) when the amount of the exhaust heat generated in the vehicle is relatively small, and the valves (22C, 22D, 23C, 23D) are closed to stop supplying the heat exchange medium to the second heat exchanger (5) when the amount of the exhaust heat generated in the vehicle is relatively large.

7. The dehumidification system according to any one of claims 1 through 6, **characterized in that** the regeneration heater (34A) is an electric heater (34A).

8. The dehumidification system according to any one of claims 1 through 7, **characterized in that** an upstream blower (16) is disposed upstream of the heat source (3, 5) and a downstream blower (17) is disposed upstream of the air outlet (11A) in the air passage (15).

9. The dehumidification system according to claim 1, **characterized in that** the heat source (3, 5) is an electric heater.
